# EUROPEAN PATENT SPECIFICATION

(11) **EP 2 604 488 B1**
(45) Date of publication and mention of the grant of the patent: **08.03.2017**
(21) Application number: 11867993.5
(22) Date of filing: 20.09.2011
(51) Int. Cl.: E05F 15/655, B61D 19/02, B61D 19/00, E05D 15/10

(54) **BUILT-IN PLUG-PULL DOOR DEVICE FOR TRACK VEHICLE**
EINGEBAUTE SCHWING- UND SCHIEBETÜR FÜR EIN KETTENFAHRZEUG
DISPOSITIF DE PORTE LOUVOYANTE INTÉGRÉE POUR VÉHICULE FERROVIAIRE

(30) Priority: 13.06.2011 CN 201110157088
(43) Date of publication of application: 19.06.2013
(73) Proprietor: Nanjing Kangni Mechanical & Electrical Co., Ltd, Nanjing, Jiangsu 210013 (CN)
(72) Inventor: SHI, Xiang, Nanjing Jiangsu 210013 (CN); DING, Ruiquan, Nanjing Jiangsu 210013 (CN); LIU, Luoming, Nanjing Jiangsu 210013 (CN); HUANG, Qiang, Nanjing Jiangsu 210013 (CN); WANG, Xingming, Nanjing Jiangsu 210013 (CN); GUO, Lina, Nanjing Jiangsu 210013 (CN)
(74) Representative: Grosse, Felix Christopher
(86) International application number: PCT/CN2011/079878
(87) International publication number: WO 2012/171279

(56) References cited:
- EP-A1- 1 767 427
- EP-A1- 2 184 431
- CA-A1- 1 196 529
- CN-U- 202 106 980
- CN-Y- 2 328 558
- CN-Y- 2 539 676
- CN-Y- 2 787 794
- CN-Y- 201 198 313
- DE-A1- 4 316 253
- FR-A1- 2 475 615
- FR-A1- 2 883 904
- JP-A- 2007 230 365

## Description

### Field of the Invention

The present invention relates to a door device for rail vehicle, in particular to a built-in sliding plug door device for rail vehicle.

### Background of the Invention

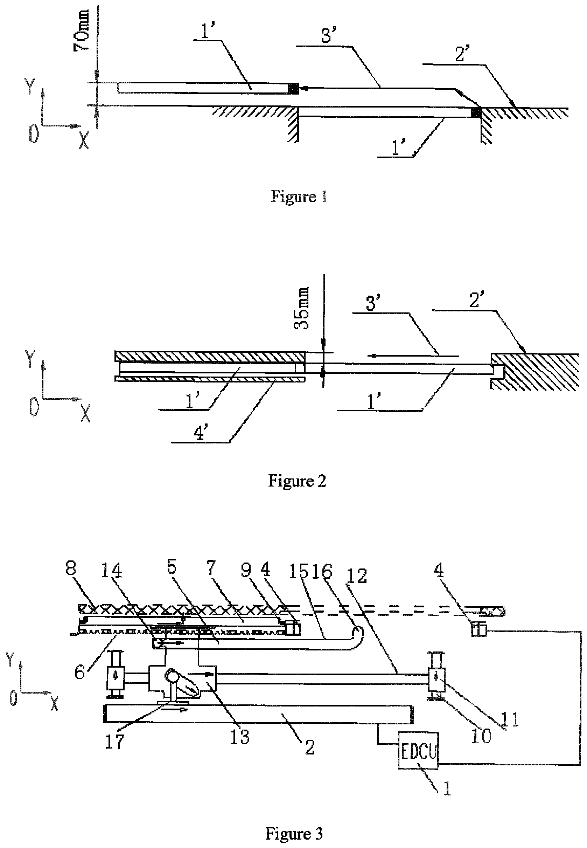

At present, the entrance automatic door systems of high speed trains, trunk-line trains, and urban railway trains in domestic and overseas can be mainly divided into swinging sliding plug doors, concealed side-sliding doors, and hung-sliding doors. As shown in Figure 1, a swinging sliding plug door mainly utilizes a drive unit to drive a door leaf 1' to open and close, and has the following key features: when the door is closed, the outer side of the door leaf 1' is flush to the outer side of the vehicle; when the door is opened, it swings out of the vehicle body 2' (in direction Y) usually by approximate 70mm. Figure 3 shows the motion track of the door leaf 1'.

The swinging sliding plug door has the following drawbacks in use: (1) the width of vehicle body 2' is reduced: automatic door systems are usually arranged on both sides of the vehicle body in symmetry, therefore, approximate 140mm space is occupied because of the swinging out of the doors. Usually, the distance from the platform or construction to the projecting part of vehicle is strictly controlled to prevent the vehicle from going beyond the boundary lines of platform and construction during runtime, therefore, the width of vehicle body 2' is limited when a swinging sliding plug door is used. The limited width of vehicle body 2' has mainly impact on the width of seats or the width of the aisle between seats, and thereby has impact on the comfort of the passengers; (2) the safety risk is increased: owing to the fact that a swinging sliding plug door swings out of the vehicle body when it is opened, the door leaf 1' may fall out to outside under the influence of the pressure wave in the situation of the meeting of the two vehicles, especially when the two vehicles are running at high speeds. Such accidents have occurred on the running of high-speed railway vehicles in foreign countries. Therefore, swinging sliding plug doors have high requirement for the safety of door system and are highly dependent on the locking system; (3) poor sealing performance: owing to the fact that the sealing effect of swinging sliding plug door is attained by tensioning the door inwards by means of a locking device and thereby pressing the sealing strips, therefore, air leakage may occur under the influence of the negative pressure in the situation of the meeting of the two vehicles running at a high speed or running through a tunnel, as a result, the passengers are caused discomfort due to the pressure on their eardrums.

As shown in Figure 2, a concealed side sliding door utilizes a drive unit to drive a door leaf 1' to open and close, and has the following key features: when the door is closed, there is approximate 35mm stage height difference between the door leaf 1' and the outer side of the vehicle body 2'; when the door is opened, it is concealed in the partition wall 4' between the vehicle body 2' and side wall. Figure 3' shows the motion track (only in direction X) of the door leaf 1'. The scheme meets the requirement for wide vehicle body 2' and safety, but it still has the following drawbacks: (1) the aerodynamic performance is poor, the running resistance is high, and the energy consumption is high when the vehicle runs at a high speed, especially at a speed higher than 250km/h; (2) the aerodynamic noise is high when the vehicle runs, due to unsmooth shape and existence of height difference; (3) since there is a stage with a certain height between the door leaf 1' and outer wall, the overall appearance of the vehicle is degraded; (4) it is unsuitable to clean the door areas of a vehicle with concealed side sliding doors by means of mechanical operation.

During the process of opening and closing the door, the door leaf of a hung sliding door is arranged on the outer side of the vehicle body and has a certain distance from the outer wall of the vehicle body usually by approximate 50mm. Since the door leaf is arranged out of the vehicle body, a hung sliding door has the following drawbacks: (1) the aerodynamic performance is poor and the noise is high when the vehicle runs at a high speed; (2) since the projecting door leaf occupies the clearance between the vehicle and the platform, the width of vehicle body is limited and the vehicle body cannot be too wide. Therefore, hung sliding doors are usually used on urban railway trains running at a low speed.

### Summary of the Invention

### Technical problem

To overcome the drawbacks in the prior art, the present invention provides a built-in sliding plug door for rail vehicle, which realizes a door leaf being built in the vehicle body and can ensure safety and air-tightness of the vehicle body when the rail vehicle runs by improving bearing mechanism, driving mechanism, sealing mechanism and pressing mechanism. Technical scheme

The present invention comprises a built-in sliding plug door according to claim 1, comprising a control mechanism, a driving mechanism, a bearing mechanism, a pressing mechanism, a guiding slide channel and a door leaf; wherein, the bearing mechanism comprises a guiding post, two sleeves, a connecting rod, a slide block and a guiding roller; wherein, the top of the slide block is fixed to the door leaf, the bottom of the slide block is connected to the driving mechanism, and the slide block is fitted on the connecting rod and can move along the connecting rod; the two sleeves are fixed to the two ends of the connecting rod respectively, and the sleeves are fitted on the guiding post and can move along the guiding post; the guiding roller is fixed to the slide bock; the guiding roller is arranged in the guiding slide channel and works with the guiding slide channel; the control mechanism is connected to the driving mechanism and the pressing mechanism respectively. The guiding slide channel comprises a linear channel section and a curved channel section, wherein, the linear channel section is arranged in transverse direction, and the curved channel section is arranged in longitudinal direction, and the bottom of the curved channel section is connected with the linear channel section.

The slide block has a base, a sliding rod, and an inclined groove, wherein, the base is arranged on the bottom of the slide block, and the base is connected to the driving mechanism, one end of the sliding rod is fixed to the base, and the other end of the sliding rod is arranged in the inclined groove, the inclined groove is arranged on the slide block, and the sliding rod and the inclined groove work with each other, so that the slide block can move in transverse direction and longitudinal direction as long as the driving mechanism provides driving power in either direction; therefore, the driving mechanism is simpler, and the entire device is also simpler.

In order to ensure that the driving power can be transferred smoothly, the angle between the inclined groove and the transverse direction is designed as 20∼70 degrees.

The present device further comprises a sealing mechanism which is arranged on the outer periphery of the door leaf, so that it does not be trodden by the passengers, and therefore has a long service life.

The sealing mechanism employs compressible rubber sealing strips, so that it can be attached to a step structure of the vehicle body tightly and compensate for manufacturing errors or deformations resulted from high speed running of the vehicle body by means of its own deformation.

The door leaf has a step structure on its ends to prevent the door leaf from sliding, and the step structure has a sealing mechanism; owing to the existence of the step structure, the door leaf does not slide to the outer side of the vehicle body with the action of the step structure after the door is closed.

The pressing mechanism comprises a rotary shaft, a pressing roller, a rotary arm, a support shaft, a bracket, an actuator and a pin roll; wherein, the actuator is connected to the control mechanism, and the actuator is fixed to the bracket; the rotary arm is connected to the bracket via the support shaft; the pressing roller is connected to the top of the rotary arm via the rotary shaft, the actuator is connected to the bottom of the rotary arm via the pin roll and drives the rotary arm to rotate around the support shaft, the rotary arm is driven to rotate by the actuator so that the pressing roller presses the door leaf tightly and keeps the door leaf in the pressed position to prevent the door leaf from being opened.

The pressing mechanism further comprises a positioning block, which is fixed to the bracket.

The working principle of the present invention is as follows: the action of opening door: first, the control mechanism controls the pressing mechanism to release the door leaf; then, the control mechanism controls the driving mechanism to move linearly along the transverse direction; since the motion track of the bearing mechanism is restricted by the guiding slide channel, in the initial stage of opening door, the bearing mechanism carries the door leaf to move in longitudinal direction (towards the inner side of the vehicle body); in that way, an inward "plugging" action is completed; when the guiding roller moves to the linear channel section of the guiding channel, the door leaf moves with the driving mechanism linearly in the transverse direction; in that way, "pulling" action to a door is completed; when the door is opened, the door leaf is arranged in the inter-layer space formed by the vehicle body and the side wall partition; thus, the opening process of the sliding plug door is completed.

The action of closing door: first, the control mechanism controls the driving mechanism to move linearly along the transverse direction; when the guiding roller moves to the curved channel section of the guiding slide channel, it drives the bearing mechanism to move along the preset track, till the door leaf is moved to flush to the outer side of the vehicle body; then, the control mechanism controls the pressing mechanism to press the door leaf tightly; thus, the closing process of the sliding plug door is completed.

### Beneficial effects

Compared to the prior art, the present invention has the following advantages: the present invention incorporates the advantages of swinging sliding plug door and concealed side sliding door, at the same time avoids the drawbacks of huge sliding door. By mean of the "plugging-pulling" movement, the present invention solves the problem of unsmooth appearance of concealed side sliding door; thus, the outer side of the vehicle body becomes more smoother, and the impact of pressure wave on the door leaf when the vehicle runs at a high speed is reduced; the result of finite element computation indicates that the average pressure on the built-in sliding plug door (smooth appearance) of the present invention is lower than that on an concealed side sliding door (concave appearance) by 47%, and thereby the wind resistance is reduced and the vehicle is more power-saving; owing to the smooth outer surface of the door, the noise produced by running at a high speed is decreased, and the average noise of a vehicle with built-in sliding plug doors (smooth appearance) is lower than that with concealed side sliding doors (concave appearance) by 7.5dB; since the built-in sliding plug door of the present invention does not occupy any space outside of the vehicle, the vehicle body can be wider than the vehicle body with swinging sliding plug doors by 140mm; the result of calculation indicates that the width of vehicle body can be increased by approximate 4.2% and the aisle space can be increased by 15%∼20%; therefore, the trafficability and comfort of the vehicle can be improved; at the end of the plugging-pulling process of the door leaf of the present invention, the door leaf is pressed tightly to the vehicle body, and thereby the possibility of door leaf falling out of the vehicle body is completely eliminated; therefore, the safety and the sealing reliability are improved.

### Brief Description of the Drawings

Figure 1 is a schematic diagram of a swinging sliding plug door;
Figure 2 is a schematic diagram of a concealed side sliding door;
Figure 3 is a structural diagram of the present invention in open state;
Figure 4 is a structural diagram of the present invention in closed state;
Figure 5 is a partially enlarged view of the sealing structure of vehicle body and door leaf shown in Figure 3;
Figure 6 is a partially diagram of the pressing mechanism of the present invention that presses the door leaf tightly when the door is closed;
Figure 7 is a partially diagram of the pressing mechanism of the present invention that releases the door leaf when the door is opened.

### Detailed Description of the Embodiments

Hereunder the embodiment of the present invention will be described in details. The embodiment is implemented according to the technical scheme of the present invention and illustrates the detailed implementation and operating process of the present invention, but the protected scope of the present invention is not limited to the embodiment.

As shown in Figure 3, the embodiment comprises a control mechanism 1, a driving mechanism 2, a bearing mechanism 3, a pressing mechanism 4, a guiding slide channel 5, a side wall partition 6, a door leaf 7, a vehicle body 8 and a sealing mechanism 9; wherein, the side wall partition 6 is arranged in the inner side of the vehicle body 8, and an interlayer is formed between the side wall partition 6 and the vehicle body 8, and the size of the interlayer matches the side of the door leaf 7; the control mechanism 1, driving mechanism 2, bearing mechanism 3, pressing mechanism 4, and guiding slide channel 5 are arranged in the inner side of the vehicle body 8; the bearing mechanism 3 comprises guiding posts 10, sleeves 11, a connecting rod 12, a slide block 13, and a guiding roller 14; wherein, the top of the slide block 13 is fixedly connected to the door leaf 7, the bottom of the slide block 13 is connected to the driving mechanism 2, the slide block 13 is fitted on the connecting rod 12 and can move along the connecting rod 12 in the transverse direction; the sleeves 11 are fixed to the two ends of the connecting rod 12, the sleeves 11 are fitted on the guiding posts 10 and can move along the guiding post 10 in the longitudinal direction; the guiding posts 10 are fixed to the vehicle body 8, the guiding roller 14 is fixed to the slide block 13, the guiding roller 14 is arranged in the guiding slide channel 5 and works with the guiding slide channel 5, the movement of the guiding roller 14 is limited in the guiding slide channel 5; the guiding slide channel 5 comprises a linear channel section 15 and a curved channel section 16, wherein, the linear channel section 15 is arranged in the transverse direction, the curved channel section 16 is arranged in the longitudinal direction, and the linear channel section 15 is perpendicular to the curved channel section 16, the bottom of the curved channel section 16 is connected with the linear channel section 15, and the top of the curved channel section 16 is close to the door leaf 7; when the guiding roller 14 is located in the linear channel section 15, the door leaf 7 is located at the inner side of the vehicle body 8; when the guiding roller 14 is located at the top of the curved channel section 16, the door leaf 7is flush to the outer side of the vehicle body 8; the control mechanism 1 is connected to the driving mechanism 2 and pressing mechanism 4 respectively;
The bearing mechanism 3 can move in the transverse direction (direction X) and the longitudinal direction (direction Y), and is designed to bear the load transferred from the door leaf 7.

The slide block 13 has a base 17, a sliding rod 18, and an inclined groove 19, wherein, the base 17 is arranged on the bottom of the slide block 13, the base 17 is connected to the driving mechanism 2, one end of the sliding rod 18 is fixed to the base 17, and the other end of the sliding rod 18 is arranged in the inclined groove 19, the sliding rod 18 works with the inclined groove 19, and the movement of the sliding rod 18 is limited in the inclined groove 19; the inclined groove 19 is arranged on the slide block 13, and the sliding rod 18 and the inclined groove 19 work with each other, so that the slide block 13 can move in transverse direction and longitudinal direction as long as the driving mechanism 2 provides driving power in either direction; therefore, the driving mechanism 2 is simpler, and the entire device is also simpler.

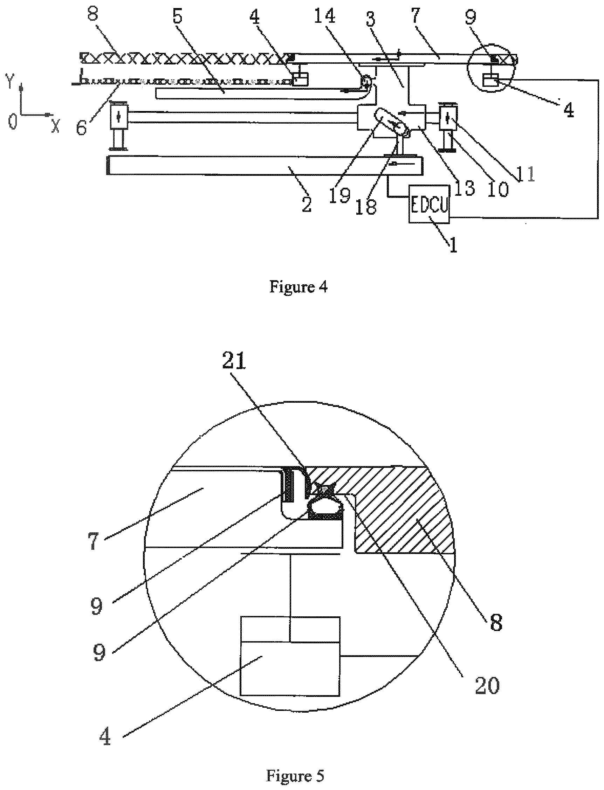

There is an certain angle between the inclined groove 19 and the transverse direction (direction X), and the angle is 35 degrees in this embodiment; virtually, the angle of the angle should ensure the power can be transferred smoothly and the door leaf 7 can be driven by the base 17 to move along the curved channel section 16 in longitudinal direction (direction Y) when the door is closed to the correct position, so that the outer side of the door leaf 7 is flush to the outer side of the vehicle body 8, as shown in Figure 4.

The driving mechanism 2 transfers the driving force of the driving mechanism 2 to the bearing mechanism 3 through non-rigid connection, till the door leaf 7 accomplishes door opening/closing action. Especially, when the door approaches to the closed position, the door leaf 7 and bearing mechanism 3 move in longitudinal direction to accomplish a "plugging" action, due to the restriction of the guiding slide channel 5 to the movement of the guiding roller 14.

As shown in Figure 5, the door leaf 7 and vehicle body 8 have a step structure on their ends respectively, and the step structures are designed to couple with each other to prevent the door leaf from sliding; the step structure of the door leaf 7 has a sealing mechanism 9. Owing to the existence of the step structure, the door leaf 7 does not slide and fall out of the vehicle body 8 with the action of the step structure after the door is closed; thus, the safety of the entire device running at a high speed is improved. There is appropriate clearance between the door leaf 7 and the vehicle body 8, so as to prevent interference between the door leaf 7 and the vehicle body 8 when the door is opened or closed; the compressible rubber sealing strip arranged near the outer side of the door leaf 7 is designed to fill up the clearance, so that the outer side of the vehicle body is flush to the outer side of the door leaf 7.

The sealing mechanism 9 in this embodiment selects compressible rubber sealing strips, which are mounted on the outer periphery of the door leaf 7, so that the compressible rubber sealing strips of the door leaf 7 do not be trodden by the passengers when the door is opened, and thereby the service life is prolonged. In other embodiments, an inflatable sealing mechanism can be utilized. A seal processing is carried out between the rubber sealing strip and the door leaf 7; during the closure of the door, under the pressure of the pressing mechanism 4, the sealing mechanism 9 moves with the door leaf 7 in direction Y and thereby is pressed to the transverse section 20 and longitudinal section 21 of the step structure of the vehicle body 8. The rubber sealing strips are attached to the transverse section 20 and longitudinal section 21 of the step structure of vehicle body 8 by their deformation, at the same time, the deformation of the rubber sealing strips themselves also can compensate for the manufacturing errors or deformations produced by running at a high speed of the vehicle body 8.

As shown in Figure 3 and 4, when the door is in closed state, one or more sets of pressing mechanisms 4 press the door leaf 7 from inside to outside by hydraulic, pneumatic, mechanical or electrical means, so that the outer side of the door leaf 7 is flush to the outer side of the vehicle body 8, and thereby the requirement for smooth appearance is met.

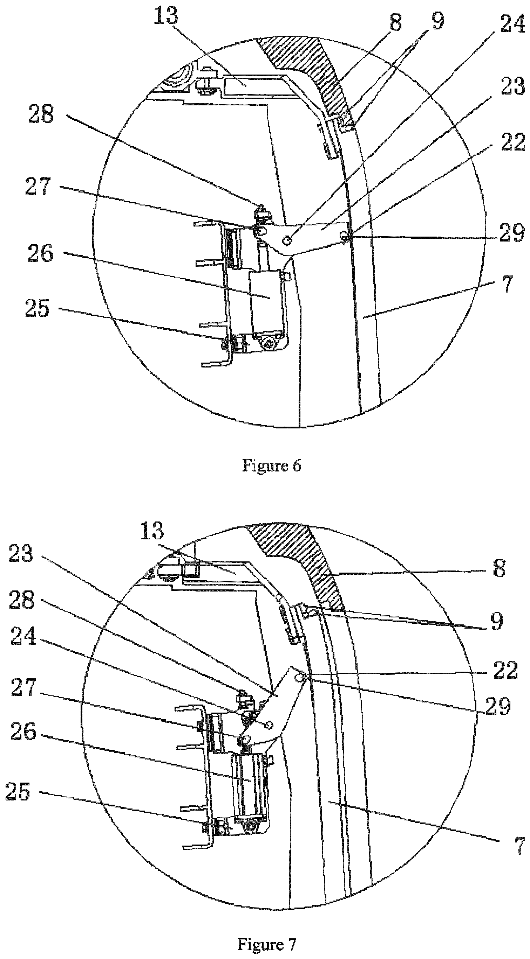

As shown in Figure 6 and 7, the pressing mechanism 4 comprises a rotary shaft 29, a pressing roller 22, a rotary arm 23, a support shaft 24, a bracket 25, an actuator 26, a pin roll 27, and a positioning block 28; wherein, the actuator 26 is connected to the control mechanism, the actuator 26 is fixed to the bracket 25; the rotary arm 23 is connected to the bracket 25 via the support shaft 24; the positioning block 28 is fixed to the bracket 25; the pressing roller 22 is connected to the top of the rotary arm 23 via the rotary shaft 29, the actuator 26 is connected to the bottom of the rotary arm 23 via the pin roll 27 and drives the rotary arm 23 to rotate around the support shaft 24, the rotary arm 23 is driven to rotate by the actuator 26 so that the pressing roller 22 presses the door leaf tightly and keeps the door leaf in the pressed position to prevent the door leaf from being opened.

As shown in Figure 6, when the door leaf is pressed, the contact points between the pressing roller 22 and the door leaf 7, the center point of the rotary shaft 29 and the center point of the support shaft 24 turn to be in the same line essentially, close to the "dead point" position, therefore, the door leaf is kept in pressed position and cannot be opened under the action of the actuator 26. An adjustable positioning block 28 is arranged on the pressing mechanism 4, in order to facilitate adjustment and ensure the existence of a "dead point" position, and also compensate for various manufacturing errors. The main advantages of such a pressing structure with "dead point" is: the pressed state does not be relieved as the stressed state of the pressed device changes, but at the same time the pressed state can be relieved easily under the action of the actuator 26. As shown in Figure 7, when the door is in open state, under the action of the actuator 26, the rotary arm 23 rotates in anti-clockwise direction to a specific angle, the "dead point" position is relieved and thereby the door is opened. The control mechanism 1 of the built-in sliding plug door can be implemented by an electronic, pneumatic other control means, as long as it can control the linear, rotary, or curved movement of the driving mechanism 2 so as to drive the movement of the bearing mechanism 3 and the pressing or releasing action of the actuator 26 of the pressing mechanism 4.

As shown in Figure 3, when open the door, first, the control mechanism 1 controls the pressing mechanism 4 to release the door leaf 7; then, the control mechanism 1 controls the driving mechanism 2 to move linearly along the transverse direction; since the motion track of the bearing mechanism 3 is restricted by the guiding slide channel 5, in the initial stage of opening door, the bearing mechanism 3 carries the door leaf 7 to move in longitudinal direction, i.e., move towards the inner side of the vehicle body; in that way, an inward "plugging" action is completed; when the guiding roller 14 moves to the linear channel section 15 of the guiding slide channel 5, the door leaf 7 moves with the driving mechanism 2 linearly in the transverse direction; in that way, "pulling" action to the door is completed; when the door is opened, the door leaf 7 is arranged in the inter-layer space formed by the vehicle body 8 and the side wall partition 6; thus, the opening process of the sliding plug door is completed. The arrows on the components in the figure indicate the moving directions of the components respectively.

As shown in Figure 4, when close the door, first, the control mechanism 1 controls the driving mechanism 2 to move linearly along the transverse direction; when the guiding roller 14 moves to the curved channel section of the guiding slide channel 5, it drives the bearing mechanism 3 to move along the preset track, till the door leaf 7 is moved to flush to the outer side of the vehicle body; then, the control mechanism 1 controls the pressing mechanism 4 to press the door leaf 7 tightly; thus, the closing process of the sliding plug door is completed. The arrows on the components in the figure indicate the moving directions of the components respectively.

## Claims

1. A built-in sliding plug door for rail vehicle, comprising a control mechanism (1), a driving mechanism (2), a bearing mechanism (3), a pressing mechanism (4), a guiding slide channel (5), a side wall portion (6), a door leaf (7) and a vehicle body (8), wherein:
the bearing mechanism (3) comprises two guiding posts (10) fixed to the vehicle body (8), two sleeves (11), a connecting rod (12), a slide block (13) and a guiding roller (14), wherein the top of the slide block (13) is fixedly connected to the door leaf (7), the bottom of the slide block (13) is connected to the driving mechanism (2), the slide block (13) is fitted on the connecting rod (12) and can move along the connecting rod (12) in the transverse direction, the two sleeves (11) are fixed to the two ends of the connecting rod (12) respectively, the sleeves (11) are fitted on the guiding posts (10) and can move along the guiding posts (10) in the longitudinal direction, the guiding roller (14) is fixed to the slide block (13)
and the guiding roller (14) is arranged in the guiding slide channel (5) and the guiding roller (14) works together with the guiding slide channel (5); the control mechanism (1) is connected to the driving mechanism (2) and the pressing mechanism (4) respectively; the side wall partition (6) is arranged in the inner side of the vehicle body (8), and an interlayer is formed between the side wall partition (6) and the vehicle body (8), and the size of the interlayer matches the side of the door leaf (7); the control mechanism (1), driving mechanism (2), bearing mechanism (3), pressing mechanism (4), and guiding slide channel (5) are arranged in the inner side of the vehicle body (8); the guiding slide channel (5) comprises a linear channel section (15) and a curved channel section (16), wherein, the linear channel section (15) is arranged in the transverse direction, the curved channel section (16) is arranged in the longitudinal direction, the bottom of the curved channel section (16) is connected with the linear channel section (15), and the top of the curved channel section (16) is close to the door leaf (7),
wherein the built-in sliding plug door further comprises a sealing mechanism (9),
**characterized in that** the linear channel section (15) is perpendicular to the curved channel section (16) and is arranged such that when the guiding roller (14) is located in the linear channel section (15), the door leaf (7) is located at the inner side of the vehicle body (8); and the curved channel section (16) is arranged such that when the guiding roller (14) is located at the top of the curved channel section (16), the door leaf (7) is flush to the outer side of the vehicle body (8),
wherein the slide block (13) has a base (17), a sliding rod (18), and an inclined groove (19), the base (17) is arranged on the bottom of the slide block (13), and the base (17) is connected to the driving mechanism (2); one end of the sliding rod (18) is fixed to the base (17), and the other end of the sliding rod (18) is arranged in the inclined groove (19); the inclined groove (19) is arranged on the slide block (13), wherein the sealing mechanism (9) is arranged on the outer periphery of the door leaf (7); and a seal processing is carried out between the sealing mechanism (9) and the door leaf (7) during the closure of the door, under the pressure of the pressing mechanism (4).

2. The built-in sliding plug door for rail vehicle according to claim 1, wherein the bottom of the curved channel section (16) communicates with the linear channel section (15).

3. The built-in sliding plug door for rail vehicle according to claim 1, wherein, the angle between the inclined groove (19) and the transverse direction is 20∼70 degrees.

4. The built-in sliding plug door for rail vehicle according to claim 1, wherein, the door leaf (7) has a step structure on its ends, and the step structure is designed to prevent the door leaf (7) from sliding and has a sealing mechanism (9).

5. The built-in sliding plug door for rail vehicle according to claim 1 or 4, wherein, the sealing mechanism (9) is made of compressible rubber sealing strips.

6. The built-in sliding plug door for rail vehicle according to claim 1, wherein, the pressing mechanism (4) comprises a rotary shaft (29), a pressing roller (22), a rotary arm (23), a support shaft (24), a bracket (25), an actuator (26) and a pin roll (27); wherein, the actuator (26) is connected to the control mechanism (1), and actuator (26) is fixed to the bracket (25); the rotary arm (23) is connected to the bracket (25) via the support shaft (24); the pressing roller (22) is connected to the top of the rotary arm (23) via the rotary shaft (29); the actuator (26) is connected to the bottom of the rotary arm (23) and drives the rotary arm (23) via the pin roll (27) to rotate around the support shaft (24).

7. The built-in sliding plug door for rail vehicle according to claim 6, wherein, the pressing mechanism (4) further comprises a positioning block (28), which is fixed to the bracket (25).

## Patentansprüche

1. Eingebaute Schwenk-Schiebetür für Schienenfahrzeug, aufweisend einen Steuermechanismus (1), einen Antriebsmechanismus (2), einen Lagermechanismus (3), einen Anpressmechanismus (4), einen Führungsgleitkanal (5), eine Seitenwandabteilung (6), ein Türblatt (7) und einen Fahrzeugkörper (8), wobei:
der Lagermechanismus (3) zwei Führungspfosten (10), die an dem Fahrzeugkörper (8) fest angebracht sind, zwei Buchsen (11), eine Verbindungsstange (12), einen Gleitblock (13) und eine Führungsrolle (14) aufweist, wobei das obere Ende des Gleitblocks (13) mit dem Türblatt (7) fest verbunden ist, das untere Ende des Gleitblocks (13) mit dem Antriebsmechanismus (2) verbunden ist, der Gleitblock (13) an der Verbindungsstange (12) angebracht ist und sich entlang der Verbindungsstange (12) in Querrichtung bewegen kann, die zwei Buchsen (11) jeweils an den zwei Enden der Verbindungsstange (12) fest angebracht sind, die Buchsen (11) an den Führungspfosten (10) angebracht sind und sich entlang den Führungspfosten (10) in Längsrichtung bewegen können, die Führungsrolle (14) an dem Gleitblock (13) fest angebracht ist und in dem Führungsgleitkanal (5) angeordnet ist und die Führungsrolle (14) mit dem Führungsgleitkanal (5) zusammenarbeitet; der Steuermechanismus (1) jeweils mit dem Antriebsmechanismus (2) und dem Anpressmechanismus (4) verbunden ist; die Seitenwandabteilung (6) an der Innenseite des Fahrzeugkörpers (8) angeordnet ist, und eine Zwischenschicht zwischen der Seitenwandabteilung (6) und dem Fahrzeugkörper (8) ausgebildet ist, und die Größe der Zwischenschicht mit der Seite des Türblattes (7) übereinstimmt; der Steuermechanismus (1), der Antriebsmechanismus (2), der Lagermechanismus (3), der Anpressmechanismus (4) und der Führungsgleitkanal (5) an der Innenseite des Fahrzeugkörpers (8) angeordnet sind; der Führungsgleitkanal (5) ein lineares Kanalteilstück (15) und ein gekrümmtes Kanalteilstück (16) aufweist, wobei das lineare Kanalteilstück (15) in Querrichtung angeordnet ist, das gekrümmte Kanalteilstück (16) in Längsrichtung angeordnet ist, das untere Ende des gekrümmten Kanalteilstücks (16) mit dem linearen Kanalteilstück (15) verbunden ist, und das obere Ende des gekrümmten Kanalteilstücks (16) nahe des Türblattes (7) ist, wobei die eingebaute Schwenk-Schiebetür weiter einen Abdichtungsmechanismus (9) aufweist, **dadurch gekennzeichnet, dass** das lineare Kanalteilstück (15) senkrecht zu dem gekrümmten Kanalteilstück (16) ist und derart angeordnet ist, dass, wenn sich die Führungsrolle (14) in dem linearen Kanalteilstück (15) befindet, das Türblatt (7) sich an der Innenseite des Fahrzeugkörpers (8) befindet; und das gekrümmte Kanalteilstück (16) derart angeordnet ist, dass, wenn die Führungsrolle (14) sich am oberen Ende des gekrümmten Kanalteilstücks (16) befindet, das Türblatt (7) bündig zur Außenseite des Fahrzeugkörpers (8) angeordnet ist, wobei der Gleitblock (13) eine Basis (17), eine Gleitstange (18) und eine geneigte Nut (19) aufweist, die Basis (17) am unteren Ende des Gleitblockes (13) angeordnet ist, und die Basis (17) mit dem Antriebsmechanismus (2) verbunden ist; das eine Ende der Gleitstange (18) an der Basis (17) fest angebracht ist, und das andere Ende der Gleitstange (18) in der geneigten Nut (19) angeordnet ist; die geneigte Nut (19) am Gleitblock (13) angeordnet ist, wobei der Abdichtungsmechanismus (9) am Außenumfang des Türblattes (7) angeordnet ist; und ein Abdichtungsvorgang zwischen dem Abdichtungsmechanismus (9) und dem Türblatt (7) während des Schließens der Tür ausgeführt wird, und zwar unter dem Druck des Anpressmechanismus (4).

2. Eingebaute Schwenk-Schiebetür für ein Schienenfahrzeug nach Anspruch 1, wobei das untere Ende des gekrümmten Kanalteilstücks (16) mit dem linearen Kanalteilstück (15) in Verbindung steht.

3. Eingebaute Schwenk-Schiebetür für ein Schienenfahrzeug nach Anspruch 1, wobei der Winkel zwischen der geneigten Nut (19) und der Querrichtung 20° bis 70° beträgt.

4. Eingebaute Schwenk-Schiebetür für ein Schienenfahrzeug nach Anspruch 1, wobei das Türblatt (7) eine Stufenstruktur an seinen Enden aufweist, und die Stufenstruktur ausgelegt ist, eine gleitende Bewegung des Türblattes (7) zu verhindern, und einen Abdichtungsmechanismus (9) aufweist.

5. Eingebaute Schwenk-Schiebetür für ein Schienenfahrzeug nach Anspruch 1 oder 4, wobei der Abdichtungsmechanismus (9) aus zusammendrückbaren Gummidichtungsstreifen hergestellt ist.

6. Eingebaute Schwenk-Schiebetür für ein Schienenfahrzeug nach Anspruch 1, wobei der Anpressmechanismus (4) eine Drehachse (29), eine Anpressrolle (22), einen Schwenkarm (23), eine Tragachse (24), einen Beschlag (25), einen Stellantrieb (26) und eine Stiftrolle (27) aufweist; wobei der Stellantrieb (26) mit dem Steuermechanismus (1) verbunden ist, und der Stellantrieb (26) an dem Beschlag (25) fest angebracht ist; der Schwenkarm (23) mit dem Beschlag (25) über die Tragachse (24) verbunden ist; die Anpressrolle (22) mit dem oberen Ende des Schwenkarms (23) über die Drehachse (29) verbunden ist; der Stellantrieb (26) mit dem unteren Ende des Schwenkarms (23) verbunden ist und über die Stiftrolle (27) den Schwenkarm (23) für ein Rotieren um die Tragachse (24) antreibt.

7. Eingebaute Schwenk-Schiebetür für ein Schienenfahrzeug nach Anspruch 6, wobei der Anpressmechanismus (4) weiter einen Positionierungsblock (28) aufweist, der an dem Beschlag (25) fest angebracht ist.

## Revendications

1. Porte louvoyante intégrée pour véhicule ferroviaire, comprenant un mécanisme de commande (1), un mécanisme d'entraînement (2), un mécanisme de support (3), un mécanisme presseur (4), un canal de glissière de guidage (5), un segment de paroi latéral (6), un vantail de porte (7) et une carrosserie de véhicule (8), dans laquelle :
le mécanisme de support (3) comprend deux montants de guidage (10) fixés à la carrosserie de véhicule (8), deux manchons (11), une tige de liaison (12), un bloc coulissant (13) et un galet de guidage (14), dans laquelle
le haut du bloc coulissant (13) est relié de manière fixe au vantail de porte (7), le bas du bloc coulissant (13) est relié au mécanisme d'entraînement (2), le bloc coulissant (13) est installé sur la tige de liaison (12) et peut se déplacer le long de la tige de liaison (12) dans la direction transversale, les deux manchons (11) sont fixés aux deux extrémités de la tige de liaison (12) respectivement, les manchons (11) sont installés sur les montants de guidage (10) et peuvent se déplacer le long des montants de guidage (10) dans la direction longitudinale, le galet de guidage (14) est fixé au bloc coulissant (13) et le galet de guidage (14) est agencé dans le canal de glissière de guidage (5) et le galet de guidage (14) agit conjointement avec le canal de glissière de guidage (5); le mécanisme de commande (1) est relié au mécanisme d'entraînement (2) et au mécanisme presseur (4) respectivement ; le segment de paroi latéral (6) est agencé dans le côté intérieur de la carrosserie de véhicule (8), et une couche intermédiaire est formée entre le segment de paroi latéral (6) et la carrosserie de véhicule (8), et la taille de la couche intermédiaire correspond au côté du vantail de porte (7) ; le mécanisme de commande (1), le mécanisme d'entraînement (2), le mécanisme de support (3), le mécanisme presseur (4) et le canal de glissière de guidage (5) sont agencés dans le côté intérieur de la carrosserie de véhicule (8) ; le canal de glissière de guidage (5) comprend une section de canal linéaire (15) et une section de canal courbée (16), dans laquelle la section de canal linéaire (15) est agencée dans la direction transversale, la section de canal courbée (16) est agencée dans la direction longitudinale, le bas de la section de canal courbée (16) est relié à la section de canal linéaire (15) et le haut de la section de canal courbée (16) est proche du vantail de porte (7),
dans laquelle la porte louvoyante intégrée comprend en outre un mécanisme d'étanchéité (9), **caractérisée en ce que** la section de canal linéaire (15) est perpendiculaire à la section de canal courbée (16) et est agencée de telle manière que lorsque le galet de guidage (14) est situé dans la section de canal linéaire (15), le vantail de porte (7) est situé au niveau du côté intérieur de la carrosserie de véhicule (8) ; et la section de canal courbée (16) est agencée de telle manière que lorsque le galet de guidage (14) est situé sur le haut de la section de canal courbée (16), le vantail de porte (7) est aligné avec le côté extérieur de la carrosserie de véhicule (8),
dans laquelle le bloc coulissant (13) a une base (17), une tige coulissante (18) et une rainure inclinée (19), la base (17) est agencée sur le bas du bloc coulissant (13), et la base (17) est reliée au mécanisme d'entraînement (2) ; une extrémité de la tige coulissante (18) est fixée à la base (17) et l'autre extrémité de la tige coulissante (18) est agencée dans la rainure inclinée (19) ; la rainure inclinée (19) est agencée sur le bloc coulissant (13),
dans laquelle le mécanisme d'étanchéité (9) est agencé sur la périphérie extérieure du vantail de porte (7) ; et un processus d'étanchéification est effectué entre le mécanisme d'étanchéité (9) et le vantail de porte (7) au cours de la fermeture de la porte, sous la pression du mécanisme presseur (4).

2. Porte louvoyante intégrée pour véhicule ferroviaire selon la revendication 1, dans laquelle le bas de la section de canal courbée (16) communique avec la section de canal linéaire (15).

3. Porte louvoyante intégrée pour véhicule ferroviaire selon la revendication 1, dans laquelle l'angle entre la rainure inclinée (19) et la direction transversale est de 20∼70 degrés.

4. Porte louvoyante intégrée pour véhicule ferroviaire selon la revendication 1, dans laquelle le vantail de porte (7) a une structure étagée à ses extrémités, et la structure étagée est conçue pour empêcher le vantail de porte (7) de coulisser et a un mécanisme d'étanchéité (9).

5. Porte louvoyante intégrée pour véhicule ferroviaire selon la revendication 1 ou 4, dans laquelle le mécanisme d'étanchéité (9) est fait de bandes d'étanchéité en caoutchouc compressibles.

6. Porte louvoyante intégrée pour véhicule ferroviaire selon la revendication 1, dans laquelle le mécanisme presseur (4) comprend un arbre rotatif (29), un galet presseur (22), un bras rotatif (23), un arbre de support (24), une patte de fixation (25), un actionneur (26) et un rouleau à broche (27) ; dans laquelle l'actionneur (26) est relié au mécanisme de commande (1), et l'actionneur (26) est fixé à la patte de fixation (25) ; le bras rotatif (23) est relié à la patte de fixation (25) par l'intermédiaire de l'arbre de support (24) ; le galet presseur (22) est relié au haut du bras rotatif (23) par l'intermédiaire de l'arbre rotatif (29) ; l'actionneur (26) est relié au bas du bras rotatif (23) et entraîne le bras rotatif (23) par l'intermédiaire du rouleau à broche (27) pour tourner autour de l'arbre de support (24).

7. Porte louvoyante intégrée pour véhicule ferroviaire selon la revendication 6, dans laquelle le mécanisme presseur (4) comprend en outre un bloc de positionnement (28), qui est fixé à la patte de fixation (25).
